# FASCICULE DE BREVET EUROPEEN

(11) **EP 1 677 884 B1**
(45) Date de publication et mention de la délivrance du brevet: **06.12.2017**
(21) Numéro de dépôt: 04805744.2
(22) Date de dépôt: 14.10.2004
(51) Int. Cl.: B01D 3/20, B01J 19/30, B01D 3/00

(54) **DISTRIBUTEUR DE FLUIDES POUR COLONNE D'ECHANGE DE CHALEUR ET DE MATIERE, NOTAMMENT GARNISSAGE, ET COLONNE MUNIE D' UN TEL DISTRIBUTEUR**
FLUIDVERTEILER FÜR EINE STOFF- UND WÄRMEAUSTAUSCHKOLONNE, INSBESONDERE EINE FÜLLKÖRPERKOLONNE UND MIT SOLCH EINEM VERTEILER VERSEHENE KOLONNE
FLUID DISTRIBUTOR FOR A MATERIAL AND HEAT EXCHANGE COLUMN, IN PARTICULAR, A PACKED COLUMN AND COLUMN PROVIDED WITH SUCH A DISTRIBUTOR

(30) Priorité: 20.10.2003 FR 0350708
(43) Date de publication de la demande: 12.07.2006
(73) Titulaire: L'AIR LIQUIDE, Société Anonyme pour l'Etude et l'Exploitation des Procédés Georges Claude, 75007 Paris (FR)
(72) Inventeur: DUBETTIER-GRENIER, Richard, F-94210 La Varenne Saint Hilaire (FR); GRIGOLETTO, Philippe, F-77270 Villeparisis (FR)
(74) Mandataire: Mercey, Fiona Susan
(86) Numéro de dépôt international: PCT/FR2004/050501
(87) Numéro de publication internationale: WO 2005/039726

(56) Documents cités:
- EP-A- 0 434 510
- EP-A- 0 665 042
- WO-A-99/34907

## Description

La présente invention est relative à un distributeur de fluides pour colonne d'échange de chaleur et de matière, plus particulièrement du type à garnissages, et notamment aux colonnes de distillation d'air, du genre comprenant une série d'espaces alternés de gaz et de liquide, définis par des parois inférieures horizontales munies d'une rangée de trous et des parois dressées munies d'une rangée d'orifices ayant chacun des mêmes dimensions.

Un distributeur de ce type est décrit dans le document GB-A-2 046 623, où le distributeur est recouvert d'un garnissage non organisé constitué d'éléments en vrac.

Un distributeur selon l'art antérieur est décrit dans EP-A-0434510.

L'invention a pour but de fournir un distributeur capable de distribuer uniformément le liquide tout en procurant une bonne répartition du gaz. Elle permet en particulier d'éliminer les cheminées, illustrées dans EP-A-0435510.

Le document EP665042 décrit un dispositif de distribution de liquide dans une colonne

Selon un objet de l'invention, il est prévu un distributeur de fluides selon la revendication 1.

Selon d'autres aspects facultatifs :
- les premiers et deuxièmes orifices sont allongés, les deuxièmes orifices étant plus allongés que d'autres orifices ;
- les premiers et deuxièmes orifices sont de forme ovale ou oblongue ;
- les espaces gaz sont fermés vers le haut ;

Selon un autre objet de l'invention, il est prévu une colonne d'échange de chaleur et de matière caractérisée en ce qu'elle comprend au moins un distributeur selon l'une des revendications 1 à 4.

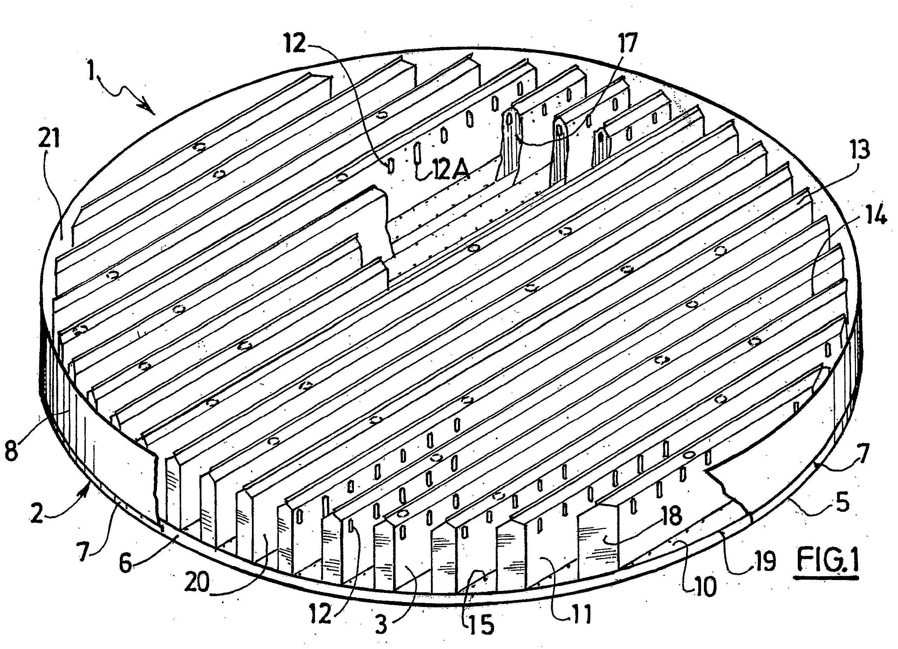

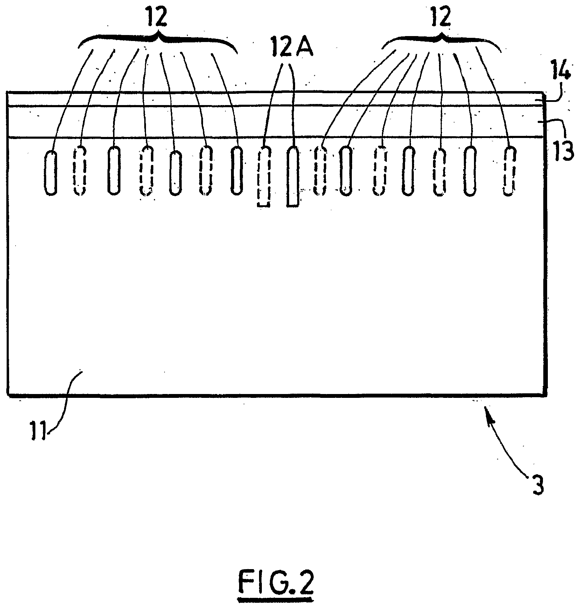

Un exemple de réalisation de l'invention va maintenant être décrit en regard des dessins annexés sur lequel la Figure 1 représente en perspective, avec arrachement partiel, un distributeur de fluides conforme à l'invention et la Figure 2 représente une vue de côté d'un profilé du distributeur.

Le distributeur 1 représenté à la figure 1 est constitué d'une couronne périphérique 2 et d'une série de profilés en U 3.

La couronne 2 comprend elle-même un profilé périphérique circulaire 5 à section en L comportant une aile horizontale inférieure 6 et une bordure extérieure 7 dirigée vers le haut. Sur cette dernière est fixée hermétiquement une jupe cylindrique 8 en saillie vers le haut.

Chaque profilé 3 est constitué d'un fond horizontal perforé 10 bordé par deux parois verticales parallèles 11. Chaque paroi 11 comporte, tout le long de son bord supérieur, une rangée horizontale d'orifices oblongs 12 à grand axe vertical, les orifices d'une paroi 11 étant décalés d'un demi-pas par rapport à ceux de la paroi opposée. Seuls certains orifices sont illustrés à la Figure 1.

Chaque paroi 11 se prolonge en oblique vers le haut et vers l'extérieur du profilé 3 en un demi-toit 13 qui se termine par une étroite bordure verticale 14 dirigée vers le haut.

Les profilés 3 sont disposés côte à côte, de sorte que leurs demi-toits 13 se rejoignent, les bordures 14 adjacentes s'appliquant l'une contre l'autre sur toute leur longueur et étant fixées ensemble par des moyens appropriés (non représentés) étanches au liquide mais non nécessairement étanches au gaz, par exemple par des points de soudure ou par agrafage.

Chaque fond 10 comporte une rangée de trous 15 le long de chaque paroi 11. Les deux rangées sont décalées d'un demi-pas l'une par rapport à l'autre, et le dimensionnement du demi-toit 13 est tel que, en vue en plan, la distance d entre les rangées de trous est la même, que ces rangées appartiennent au même profilé 3 ou à deux profilés adjacents. On obtient ainsi sur toute la surface du distributeur un maillage régulier des trous 15, en vue en plan, avec une maille en forme de losange.

De plus, chaque fond 10 comporte dans son plan longitudinal médian, à des intervalles réguliers nettement supérieurs au pas des trous 15, un orifice 16 de plus grand diamètre dans lequel s'emboîte l'extrémité inférieure étroite d'une cheminée 4. Ces cheminées ont la forme d'un entonnoir qui s'élève jusqu'à un niveau légèrement inférieur à celui du bord inférieur des orifices 12.

Chaque profilé 3 est coupé à longueur, transversalement ou obliquement, de façon à s'appuyer par chaque extrémité sur l'aile 6 de la couronne 2. Chaque extrémité de chaque espace de gaz 17 défini entre deux profilés adjacents est obturée hermétiquement, au moins jusqu'au niveau du bord inférieur des orifices oblongs 12A, par une plaquette verticale 18 de forme correspondante, soudée le long de ses bords latéraux, dont le bord inférieur affleure la face intérieure des fonds 10 et dont le bord supérieur définit un passage de gaz d'extrémité 180.

La plupart des orifices 12 sont oblongs avec des coins arrondis.

Un orifice sur cinq 12A est plus long que les autres orifices 12, ainsi permettant au liquide de s'écouler dans la partie inférieure des orifices 12A, sans entraver la montée de gaz à travers les orifices 12. Ces orifices plus longs 12A sont oblongs avec des coins arrondis en haut et des coins carrés en bas.

Les bords inférieurs des plaquettes 18 et les extrémités des fonds 10 sont soudés sur l'aile 6 par une soudure continue hermétique 19.

Ainsi, le distributeur définit un certain nombre d'espaces 20 de collection de liquide délimités par un fond 10 et les deux parois verticales 11 du même profilé, ces espaces 20 alternant avec les espaces de gaz 17 précités, qui sont des espaces de passage de gaz. Le distributeur définit également un canal périphérique 21, délimité par la bordure 7 et la jupe 8 de la couronne 1 et communiquant avec l'ensemble des espaces 20.

Le distributeur 1 est destiné à être monté dans une colonne d'échange de chaleur et de matière, par exemple une colonne de distillation d'air, du type à garnissage organisé, notamment à garnissage ondulé-croisé, tel que décrit dans le document WO-A-89/10527 sus-mentionné. Une colonne de ce type est divisée en un certain nombre de tronçons dont chacun est équipé d'un tronçon de garnissage respectivement. Dans le cas d'un garnissage ondulé-croisé, chaque tronçon comprend un empilement de plaques verticales ondulées en oblique, les ondes des lamelles adjacentes étant inclinées en sens opposés.

En fonctionnement, le liquide tombe de toute la surface du tronçon supérieur et est recueilli dans les espaces de liquide 20 et dans le canal 21, lequel assure une égalisation du niveau du liquide dans tous les espaces 20. Le liquide est ensuite distribué uniformément au pack inférieur grâce au maillage régulier des trous 15.

En même temps, le gaz montant pénètre dans les espaces de gaz 17 et en sort par les orifices 12,12A au-dessus du niveau du liquide. En fonction des diamètres relatifs du distributeur et du pack supérieur, on peut être amené :
- soit à laisser du gaz sortir aux extrémités des espaces 17, en limitant la hauteur des plaquettes;
- soit à obturer complètement les extrémités des espaces 17 au moyen de ces plaquettes ;
- soit non seulement à effectuer cette obturation, mais également à supprimer les orifices 12 voisins des extrémités des profilés 3.

Les gaz est ainsi, lui aussi, réparti à peu près uniformément sur toute la section de la colonne, sans perte de charge excessive au passage du distributeur. Grâce au fait que les orifices 12,12A sont prévues dans les parois verticales 11, et également grâce à leur forme oblongue, ces orifices offrent une aire totale étendue au passage du gaz, sans gêner la chute du liquide sur toute la surface du distributeur et sans réduire de façon importante l'inertie mécanique des parois 11.

Le distributeur peut également être construit selon les techniques de EP-A-0736314 ou d'autres techniques.

La Figure 2 montre la paroi 11, avec son demi toit 13 et la bordure 14. Tout le long de la partie supérieure de la paroi s'étale une rangée d'orifices 12, 12A. Les orifices 12, 12A de la paroi dressée derrière celle-ci sont montrés en pointillés et sont décalés d'un demi pas avec ceux de la paroi placée devant. Les premiers orifices 12 de longueur réduite sont groupés par quatre, chaque regroupement de premiers orifices 12 étant séparé par un deuxième orifice 12A environ 20 et 30 % plus long que les premiers orifices.

De préférence un premier orifice 12 de longueur réduite se trouve en début et fin de rangée.

## Revendications

1. Distributeur de fluides pour colonne d'échange de chaleur et de matière, comprenant une série de parois dressées parallèles (11) adjacentes définissant des espaces alternés de gaz (17) et de liquide (20), des parois dressées étant séparées par des parois inférieures horizontales (10) munies d'une rangée de trous (15) et au moins une portion de chaque paroi dressée (11) étant munie d'une rangée d'orifices (12, 12A), chaque paire de parois dressées adjacentes définissant un espace de gaz (17), la rangée d'orifices (12, 12A) étant formée dans la partie supérieure de la paroi dressée (11), les parois horizontales étant fixées par leurs extrémités à une couronne périphérique (2) **caractérisé en ce que** des premiers orifices (12) ont une première étendue vers la paroi horizontale et **caractérisé en ce que** des deuxièmes orifices (12A) ont une deuxième étendue vers la paroi horizontale, la deuxième étendue étant supérieure à la première, ainsi permettant au liquide de s'écouler dans la partie inférieure des deuxièmes orifices, sans entraver la montée de gaz à travers les premiers orifices, et la rangée d'orifices comprenant un orifice sur 5 orifices (12, 12A) qui est un deuxième orifice (12A), et les autres orifices de la rangée étant des premiers orifices (12) disposés entre les deuxièmes orifices.

2. Distributeur selon la revendication 1 dans lequel les premiers et deuxièmes orifices (12, 12A) sont allongés, les deuxièmes orifices (12A) étant plus allongés que d'autres orifices.

3. Distributeur selon la revendication 2 dans lequel les premiers et deuxièmes orifices (12, 12A) sont de forme ovale ou oblongue.

4. Distributeur selon l'une des revendications précédentes dans lequel les espaces gaz sont fermés vers le haut.

5. Colonne d'échange de chaleur et de matière **caractérisée en ce qu'**elle comprend au moins un distributeur selon l'une des revendications 1 à 4.

## Patentansprüche

1. Fluidverteiler für eine Wärme- und Stoffaustauschkolonne, der eine Serie von benachbarten, aufrecht stehenden parallelen Wänden (11) umfasst, die abwechselnde Gas- (17) und Flüssigkeitsräume (20) definieren, wobei aufrecht stehende Wände durch untere horizontale Wände (10) getrennt sind, die mit einer Reihe von Löchern (15) versehen sind, und mindestens ein Abschnitt jeder aufrecht stehenden Wand (11) mit einer Reihe von Bohrungen (12, 12A) versehen ist, wobei jedes Paar benachbarter aufrecht stehender Wände einen Gasraum (17) definiert, wobei die Reihe von Bohrungen (12, 12A) in dem oberen Teil der aufrecht stehenden Wand (11) gebildet ist, wobei die horizontalen Wände mit ihren Enden an einem umlaufenden Kranz (2) befestigt sind, **dadurch gekennzeichnet, dass** erste Bohrungen (12) eine erste Ausdehnung zu der horizontalen Wand besitzen und **dadurch gekennzeichnet, dass** zweite Bohrungen (12A) eine zweite Ausdehnung zu der horizontalen Wand besitzen, wobei die zweite Ausdehnung größer ist als die erste, um auf diese Weise der Flüssigkeit zu ermöglichen, in dem unteren Teil der zweiten Bohrungen abzulaufen, ohne das Aufsteigen von Gas durch die ersten Bohrungen zu behindern, und wobei die Reihe von Bohrungen auf 5 Bohrungen (12, 12A) eine Bohrung umfasst, die eine zweite Bohrung (12A) ist, und wobei die anderen Bohrungen der Reihe erste Bohrungen (12) sind, die zwischen den zweiten Bohrungen angeordnet sind.

2. Verteiler nach Anspruch 1, bei dem die ersten und zweiten Bohrungen (12, 12A) langgestreckt sind, wobei die zweiten Bohrungen (12A) länger gestreckt sind als andere Bohrungen.

3. Verteiler nach Anspruch 2, bei dem die ersten und zweiten Bohrungen (12, 12A) eine ovale oder längliche Form besitzen.

4. Verteiler nach einem der vorstehenden Ansprüche, bei dem die Gasräume nach oben geschlossen sind.

5. Wärme- und Stoffaustauschkolonne, **dadurch gekennzeichnet, dass** sie mindestens einen Verteiler nach einem der Ansprüche 1 bis 4 umfasst.

## Claims

1. Fluid distributor for a heat and material exchange column, comprising a series of adjacent raised parallel walls (11) defining alternate spaces of gas (17) and liquid (20), the raised walls being separated by lower horizontal walls (10) equipped with a row of openings (15) and at least one portion of each raised wall (11) being equipped with a row of orifices (12, 12A), each pair of adjacent raised walls defining a gas space (17), the row of orifices (12, 12A) being formed in the upper section of the raised wall (11), the horizontal walls being fixed by their ends to a peripheral crown (2) **characterised in that** first orifices (12) have a first dimension towards the horizontal wall and **characterised in that** second orifices (12A) have a second dimension towards the horizontal wall, the second dimension being greater than the first, thus enabling the liquid to flow into the lower section of the second orifices, without hindering the gas rising through the first orifices, and the row of orifices comprising one orifice out of five orifices (12, 12A), which is a second orifice (12A), and the other orifices of the row being first orifices (12) positioned between the second orifices.

2. Distributor according to claim 1 wherein the first and second orifices (12, 12A) are extended, the second orifices (12A) being longer than other orifices.

3. Distributor according to claim 2 wherein the first and second orifices (12, 12A) are an oval or oblong shape.

4. Distributor according to one of the preceding claims wherein the gas spaces are closed towards the top.

5. Heat and material exchange column **characterised in that** it comprises at least one distributor according to one of the claims 1 to 4.
